# EUROPEAN PATENT SPECIFICATION

(11) **EP 3 874 951 B1**
(45) Date of publication and mention of the grant of the patent: **17.09.2025**
(21) Application number: 19879087.5
(22) Date of filing: 30.10.2019
(51) Int. Cl.: A01N 57/20, A01N 25/30, A01P 13/00

(54) **HERBICIDE COMPOSITION**
HERBIZIDZUSAMMENSETZUNG
COMPOSITION HERBICIDE

(30) Priority: 31.10.2018 JP 2018205094
(43) Date of publication of application: 08.09.2021
(73) Proprietor: Kao Corporation, Chuo-ku, Tokyo 103-8210 (JP)
(72) Inventor: UI, Takahito, Wakayama-shi, Wakayama 640-8580 (JP)
(74) Representative: Hoffmann Eitle
(86) International application number: PCT/JP2019/042512
(87) International publication number: WO 2020/090866

(56) References cited:
- WO-A1-2012/086617
- WO-A1-2017/104733
- WO-A1-2017/196856
- WO-A1-2019/212888
- WO-A1-99/27781
- CN-A- 103 518 772
- JP-A- 2009 525 345
- JP-A- 2015 205 869
- JP-A- H10 512 575
- US-A1- 2007 184 982
- US-A1- 2010 022 392
- BEICA T ET AL: "TEMPERATURE DEPENDENCE OF THE DENSITY OF CALAMITIC AND DISCOTIC NEMATIC LYOTROPIC LIQUID CRYSTALS CONTAINING SODIUM LAURYL SULPHATE/DECANOL/WATER", LIQUID CRYSTALS, TAYLOR & FRANCIS, GB, vol. 29, no. 10, 1 October 2002 (2002-10-01), pages 1275 - 1278, XP001128603, ISSN: 0267-8292

## Description

### Field of the Invention

The present invention relates to a herbicide composition, a weeding method and a glufosinate efficacy enhancing agent composition.

### Background of the Invention

Glufosinate or a salt thereof, for example, an ammonium salt of glufosinate is a known amino acid-based herbicide that is absorbed through the green parts of plants, and it is considered that glutamine synthetase inhibition causes ammonia accumulation, which inhibits plant physiology to result in herbicidal activity being exhibited.

Conventionally, various compounds have been used in combination with agrochemical-containing compositions in order to bring out the full effect of agrochemicals.

JP-A 2001-524496 discloses a surfactant system for liquid aqueous or aqueous-organic formulations comprising one or more basic cosurfactants and one or more surfactants from the group of acidic phosphoric esters. The formulations include, for example, glufosinate-ammonium or glyphosate (salts).

JP-A 2002-537312 discloses an aqueous agrochemical concentrate formulation comprising a) an agrochemical electrolyte, b) a water-insoluble agrochemical system, c) an alkyglycoside, and d) a co-surfactant which interacts with the alkyglycoside to form a structured aqueous system.

WO 99/277781 A1 describes surfactant systems for liquid aqueous or aqueous-organic formulations containing a mixture comprised of one or several basic cosurfactants and one or several surfactants from the group of phosphoric acid esters.

CN 103518772 A relates to herbicide composition containing glufosinate, glyphosate and oxadiazon.

US 2010/022392 A1 and US 2007/184982 A1 describe a liquid herbicidal composition comprising 20 to 35 wt% of a water-soluble herbicidal ingredient, a C8-C16 alkyl ether sulfate, an organic solvent, and an alkyl polyglucoside.

Beica et al., Liquid Crystals, 2002, Vol. 29, No. 10, 1275-1278, investigates the temperature dependence of density at normal pressure for two compositions of sodium lauryl sulphate/dodecanol/water solutions.

### Summary of the Invention

The present invention provides a herbicide composition using glufosinate excellent in herbicidal effect.

The present invention relates to a herbicide composition containing the following components (A), (B) and (C), wherein a mass ratio between the content of component (B) and the content of component (C), (C)/(B), is 0.010 or more and 0.50 or less:
component (A): a compound selected from glufosinate and a salt thereof;
component (B): a compound represented by the following general formula (B-I):

   R^{1b}O(R^{2b}O)ₙSO₃⁻M⁺ (B-I)
wherein R^{1b} is a hydrocarbon group with 8 or more and 24 or less carbons, R^{2b} is an alkanediyl group with 2 or more and 4 or less carbons, n is an average number of added moles and 0 or more and 30 or less, and M⁺ is a counter ion; and
component (C): one or more compounds selected from a compound represented by the following general formula (C-I) and a compound represented by the following general formula (C-II):

   R^{1c}-OH (C-I)
wherein R^{1c} represents a hydrocarbon group with 8 or more and 18 or less carbons; and

   R^{2c}-N(R^{3c})₂ (C-II)
wherein R^{2c} represents a hydrocarbon group with 6 or more and 18 or less carbons, and R^{3c} represents independently a hydrogen atom, a methyl group or a hydroxyethyl group.

In addition, the present invention relates to a weeding method including spraying a herbicide spray liquid prepared from the herbicide composition of the present invention to a plant.

Moreover, the present invention relates to a glufosinate efficacy enhancing agent composition containing the above components (B) and (C) and water, wherein the amount of water in the composition is 5 mass% or more and 60 mass% or less, and a mass ratio between the content of component (B) and the content of component (C), (C)/(B), is 0.010 or more and 0.50 or less.

According to the present invention, provided is a herbicide composition using glufosinate excellent in herbicidal effect.

### Embodiments of the Invention

### [Herbicide composition]

The reason why the herbicide composition of the present invention is excellent in herbicidal effect is not wholly clear, but is presumed to be as follows. The herbicidal performance of glufosinate is greatly affected by the adhesion amount of sprayed glufosinate-containing droplets, and in order to enhance the adhesion, it is important to optimize the contact area between the droplets and plants (leaves or the like) and further to increase the adhesion energy. It is presumed that, in the present invention, both high adhesion energy and optimum contact area could be achieved by using components (B) and (C) at a predetermined ratio, and as a result of the enhanced adhesion, herbicidal effect was improved. Moreover, it is presumed that, when component (D) is contained, the adhesion amount of the said droplets is further enhanced for the same reason as mentioned above and herbicidal effect can be further improved.

### <Component (A)>

Component (A) of the present invention is a compound selected from glufosinate and a salt thereof. Component (A) is an agrochemical active ingredient of an amino acid-based herbicide. Note that, while an exemplary glufosinate registered as an agrochemical in Japan is ammonium-DL-homoalanine-4-yl(methyl)-phosphinate, that is, an ammonium salt compound, glufosinate as used herein refers to an acid-type compound (a compound with an acid-type phosphinic acid group).

Exemplary salts of glufosinate are an ammonium salt and a sodium salt.

In formulating the herbicide composition with component (A), an aqueous solution, a liquid agent, wettable powder or the like containing component (A) can also be used.

### <Component (B)>

Component (B) of the present invention is a compound represented by the following general formula (B-I):

R^{1b}O(R^{2b}O)ₙSO₃⁻M⁺ (B-I)

wherein R^{1b} is a hydrocarbon group with 8 or more and 24 or less carbons, R^{2b} is an alkanediyl group with 2 or more and 4 or less carbons, n is an average number of added moles and 0 or more and 30 or less, and M⁺ is a counter ion.

In the general formula (B-I), R^{1b} is preferably an aliphatic hydrocarbon group, more preferably an alkyl group and further preferably a linear alkyl group from the viewpoint of enhancing herbicidal effect. R^{1b} has 8 or more, preferably 10 or more and more preferably 12 or more carbons from the viewpoint of enhancing herbicidal effect, and preferably 16 or less and more preferably 14 or less carbons from the viewpoints of enhancing herbicidal effect and improving formulation stability.

R^{2b} has preferably 2 or more and 3 or less carbons and more preferably 2 carbons from the viewpoint of enhancing herbicidal effect. R^{2b} is preferably an ethylene group.

n is 0 or more, preferably 1 or more and more preferably 2 or more from the viewpoint of enhancing herbicidal effect, and preferably 10 or less, more preferably 5 or less and further preferably 3 or less from the viewpoints of enhancing herbicidal effect and improving formulation stability.

M⁺ is a counter ion and examples thereof include, for example, ions of alkali metals such as sodium, potassium and the like, an ammonium ion, a triethanolammonium ion, and the like, and alkali metal ions are preferable and a sodium ion is more preferable from the viewpoints of enhancing herbicidal effect and improving formulation stability.

### <Component (C)>

Component (C) of the present invention is one or more compounds selected from a compound represented by the above general formula (C-I) (hereinafter, also referred to as component (C-I)) and a compound represented by the above general formula (C-II) (hereinafter, also referred to as component (C-II)).

In component (C-I), R^{1c} is preferably an aliphatic hydrocarbon group and more preferably an alkyl group from the viewpoint of enhancing herbicidal effect, further preferably a linear alkyl group from the viewpoint of availability, and further preferably a branched alkyl group from the viewpoint of improving formulation stability. R^{1c} has 8 or more and preferably 10 or more carbons from the viewpoint of enhancing herbicidal effect, and preferably 18 or less, more preferably 16 or less and further preferably 14 or less carbons from the viewpoints of enhancing herbicidal effect and improving formulation stability.

In component (C-II), R^{2c} is preferably an aliphatic hydrocarbon group, more preferably an alkyl group and further preferably a linear alkyl group from the viewpoint of enhancing herbicidal effect. R^{2c} has preferably 8 or more and more preferably 10 or more carbons from the viewpoint of enhancing herbicidal effect, and preferably 18 or less, more preferably 16 or less, further preferably 14 or less and furthermore preferably 12 or less carbons from the viewpoints of enhancing herbicidal effect and improving formulation stability. R^{3c} is independently preferably a hydrogen atom or a methyl group and more preferably a methyl group. Note that component (C-II) may also be present as a salt in the herbicide composition depending on composition or the like. Such a salt is also regarded as component (C-II) in the present invention.

### <Composition and others>

The herbicide composition of the present invention contains component (A) in an amount of preferably 5 mass% or more, more preferably 10 mass% or more and further preferably 15 mass% or more from the viewpoints of enhanced herbicidal effect and economic efficiency at the time of transportation or storage, and preferably 40 mass% or less, more preferably 30 mass% or less and further preferably 25 mass% or less from the viewpoints of improved formulation stability and safety. Note that, in the present invention, the content of component (A) in the composition is based on a value expressed in terms of an acid-type compound.

The herbicide composition of the present invention contains component (B) in an amount of preferably 5 mass% or more, more preferably 10 mass% or more and further preferably 15 mass% or more from the viewpoints of enhanced herbicidal effect and economic efficiency at the time of transportation or storage, and preferably 40 mass% or less, more preferably 30 mass% or less and further preferably 20 mass% or less from the viewpoints of improved formulation stability and safety. Note that, in the present invention, the content of component (B) in the composition is based on a value expressed in terms of an acid-type compound.

The herbicide composition of the present invention contains component (C) in an amount of preferably 0.05 mass% or more, more preferably 0.1 mass% or more and further preferably 0.25 mass% or more from the viewpoints of enhanced herbicidal effect and economic efficiency at the time of transportation or storage, and preferably 8 mass% or less, more preferably 5 mass% or less and further preferably 3 mass% or less from the viewpoints of enhancing herbicidal effect and improving formulation stability. Note that, in the present invention, as for component (C-II) of component (C), the content of component (C-II) in the composition is based on a value expressed in terms of an amine-type compound.

In the herbicide composition of the present invention, a mass ratio between the content of component (A) and the content of component (C), (C)/(A), is preferably 0.01 or more, more preferably 0.02 or more and further preferably 0.03 or more from the viewpoint of enhancing herbicidal effect, and preferably 0.4 or less, more preferably 0.35 or less, further preferably 0.3 or less and furthermore preferably 0.2 or less from the viewpoints of enhancing herbicidal effect and improving formulation stability.

In the herbicide composition of the present invention, a mass ratio between the content of component (B) and the content of component (C), (C)/(B), is 0.010 or more, preferably 0.015 or more, more preferably 0.025 or more, further preferably 0.050 or more and furthermore preferably 0.10 or more from the viewpoint of enhancing herbicidal effect, and 0.50 or less, preferably 0.45 or less, more preferably 0.34 or less, further preferably 0.25 or less, furthermore preferably 0.20 or less and furthermore preferably 0.12 or less from the viewpoint of enhancing herbicidal effect.

When component (C) is component (C-I), the above mass ratio (C)/(B) is preferably 0.02 or more, more preferably 0.05 or more and further preferably 0.1 or more from the viewpoint of enhancing herbicidal effect, and preferably 0.45 or less, more preferably 0.3 or less and further preferably 0.2 or less from the viewpoints of enhancing herbicidal effect and improving formulation stability.

In addition, when component (C) is component (C-II), the above mass ratio (C)/(B) is preferably 0.012 or more, more preferably 0.016 or more and further preferably 0.020 or more from the viewpoint of enhancing herbicidal effect, and preferably 0.25 or less, more preferably 0.15 or less, further preferably 0.10 or less and furthermore preferably 0.060 or less from the viewpoints of enhancing herbicidal effect and improving formulation stability.

In the herbicide composition of the present invention, the total content of components (B) and (C) is preferably 5 mass% or more, more preferably 5.5 mass% or more, further preferably 10 mass% or more and furthermore preferably 15 mass% or more from the viewpoint of enhancing herbicidal effect, and preferably 40 mass% or less, more preferably 30 mass% or less and further preferably 25 mass% or less from the viewpoints of improved formulation stability and economic efficiency at the time of transportation or storage.

In the herbicide composition of the present invention, a mass ratio between the content of component (A) and the total content of components (B) and (C), [(B)+(C)]/(A), is preferably 0.1 or more, more preferably 0.3 or more and further preferably 0.5 or more from the viewpoint of enhancing herbicidal effect, and preferably 3 or less, more preferably 2 or less and further preferably 1.5 or less from the viewpoints of economic efficiency at the time of transportation or storage and improved formulation stability.

The herbicide composition of the present invention preferably further contains the following component (D):
component (D): an aromatic sulfonate salt having an aliphatic hydrocarbon group.

Component (D) may be an aromatic sulfonate salt having a hydrocarbon group substituted on an aromatic ring, e.g., an aliphatic hydrocarbon group.

The aliphatic hydrocarbon group of component (D) is preferably an alkyl group and more preferably a linear alkyl group from the viewpoint of enhancing herbicidal effect.

The aliphatic hydrocarbon group of component (D) has preferably 10 or more and more preferably 12 or more carbons from the viewpoint of enhancing herbicidal effect, and preferably 16 or less and more preferably 14 or less carbons from the viewpoints of enhancing herbicidal effect and improving formulation stability.

Examples of component (D) preferably include one or more compounds selected from an alkylbenzene sulfonate salt, an alkylnaphthalenesulfonate salt and an alkyl diphenyl ether disulfonate salt. The alkyl groups in these compounds are preferably linear from the viewpoint of enhancing herbicidal effect. The alkyl groups have preferably 10 or more and more preferably 12 or more carbons from the viewpoint of enhancing herbicidal effect, and preferably 16 or less and more preferably 14 or less carbons from the viewpoints of enhancing herbicidal effect and improving formulation stability.

Examples of a salt of component (D) include, for example, alkali metal salts such as a sodium salt, a potassium salt and the like, and an ammonium salt, and a sodium salt is preferable from the viewpoints of enhancing herbicidal effect and improving formulation stability.

When the herbicide composition of the present invention contains component (D), the composition contains component (D) in an amount of preferably 0.25 mass% or more, more preferably 0.5 mass% or more and further preferably 0.8 mass% or more from the viewpoint of enhancing herbicidal effect, and preferably 5 mass% or less, more preferably 3 mass% or less and further preferably 1.5 mass% or less from the viewpoints of enhancing herbicidal effect and improving formulation stability. Note that, in the present invention, the content of component (D) in the composition is based on a value expressed in terms of an acid-type compound.

In addition, when the herbicide composition of the present invention contains component (D), a mass ratio between the content of component (B) and the content of component (D), (D)/(B), is preferably 0.01 or more, more preferably 0.03 or more and further preferably 0.05 or more, and preferably 0.4 or less, more preferably 0.2 or less, further preferably 0.1 or less and furthermore preferably 0.08 or less.

The herbicide composition of the present invention is preferably a liquid composition and more preferably a liquid composition containing water from the viewpoint of formulation stability. The herbicide composition of the present invention contains water in an amount of preferably 10 mass% or more, more preferably 20 mass% or more and further preferably 30 mass% or more from the viewpoint of formulation stability, and preferably 80 mass% or less, more preferably 70 mass% or less and further preferably 60 mass% or less from the viewpoint of economic efficiency at the time of transportation or storage.

As the water, tap water, distilled water, deionized water or the like can be used in such a range that does not inhibit the effect of the herbicide composition of the present invention, and deionized water is preferable from the viewpoint of stability.

The herbicide composition of the present invention can contain an agrochemical active ingredient of an existing herbicide other than component (A) (hereinafter, also referred to as component (A')).

Examples of component (A') include agrochemical active ingredients of, for example, the following herbicides: diphenyl ether herbicides such as acifluorfen, chlomethoxynil, fomesafen, lactofen, oxyfluorfen, aclonifen and the like; phenoxycarboxylic acid herbicides such as 2,4-D, clomeprop, MCPA, MCPB, MCPP and the like; dinitrophenol herbicides such as DNBP, dinoterb and the like; carbamate herbicides such as carbetamide, IPC and the like; bipyridinium herbicides such as diquat, paraquat and the like; urea herbicides such as diuron, dimefuron, ethidimuron, fenuron, metoxuron, bentazon and the like; triazine herbicides such as ametrine, atrazine, prometon, trietazine and the like; and sulfonylurea herbicides such as amidosulfuron, cinosulfuron, flazasulfron, iodosulfuron, nicosulfuron and the like, etc.

In the herbicide composition of the present invention, the content of component (A') is preferably 20 mass% or less, more preferably 15 mass% or less, further preferably 10 mass% or less and furthermore preferably 5 mass% or less, and preferably 0 mass% or more, and may be 0 mass% from the viewpoints of reduction in environmental burden and safety. In the herbicide composition of the present invention, a mass ratio between the content of component (A) and the content of component (A'), (A')/(A), is preferably less than 1, more preferably 0.8 or less, further preferably 0.5 or less, furthermore preferably 0.2 or less, furthermore preferably 0.1 or less and furthermore preferably 0.05 or less, and preferably 0 or more, and may be 0 from the viewpoints of reduction in environmental burden and safety.

The herbicide composition of the present invention can optionally contain compounds other than components (A) to (C), water and optional components (D) and (A'), for example, a defoamer, a surfactant, a solvent, a chelating agent, a pH adjuster, inorganic salts, a solubilizing agent, a colorant, an evaporation inhibitor, a thickener and the like.

Exemplary defoamers are a silicone-based defoamer, a polyoxyalkylene-modified hydrocarbon-based defoamer, a fluorine-based defoamer and the like, and a silicone-based defoamer is preferable from the viewpoint of defoamability. Silicone-based defoamers such as silicone oil and modified-silicone oil are more preferable, and modified-silicone oil is further preferable from the viewpoint of formulation stability. Exemplary commercially available products of silicone oil are "ANTIFOAM E-20" (manufactured by Kao Corporation) and "KF-50," "KF-73," "KF-71," "KM-7750," "KM-98," "KM-7752" and "KF-96" (all manufactured by Shin-Etsu Chemical Co., Ltd.), and "KF-7750," "KF-7752" and "KM-98" are preferable. Exemplary commercially available products of modified-silicone oil are "KF-6701" and "KS-531" (both manufactured by Shin-Etsu Chemical Co., Ltd.), and "KF-6701" is preferable. Two or more defoamers may be combined. When the herbicide composition of the present invention contains a defoamer, the content thereof is preferably 0.005 mass% or more and more preferably 0.01 mass% or more from the viewpoint of defoamability, and preferably 0.1 mass% or less and more preferably 0.05 mass% or less from the viewpoints of improved formulation stability and reduction in environmental burden. A mass ratio of the defoamer to component (B), i.e., a mass ratio of defoamer/component (B), is preferably 0.0002 or more, more preferably 0.0004 or more and further preferably 0.0008 or more from the viewpoint of defoamability, and preferably 0.01 or less, more preferably 0.008 or less and further preferably 0.003 or less from the viewpoints of formulation stability and reduction in environmental burden.

The herbicide composition of the present invention may contain a surfactant other than components (B), (C), (D) and the above component used as a defoamer (hereinafter, also referred to as component (E)). Examples of component (E) include an anionic surfactant (excluding components (B) and (D)), a cationic surfactant, a nonionic surfactant, an amphoteric surfactant and the like. Component (E) may be a combination of two or more.

Exemplary anionic surfactants are a dialkyl sulfosuccinate salt, an α-olefin sulfonate salt, an alkanesulfonate salt, a fatty acid salt, a polyoxyalkylene fatty acid salt and the like. One or more anionic surfactants selected from a dialkyl sulfosuccinate salt, a fatty acid salt, a polyoxyalkylene fatty acid salt and an α-olefin sulfonate salt are preferable, and one or more selected from a dialkyl sulfosuccinate salt, a fatty acid salt, a polyoxyalkylene fatty acid salt and an α-olefin sulfonate salt are more preferable. Exemplary anionic surfactant salts are alkali metal salts such as a sodium salt, a potassium salt and the like.

Exemplary nonionic surfactants are a polyoxyalkylenealkyl ether, a sorbitan fatty acid ester, a polyoxyalkylene fatty acid ester, a polyoxyalkylenealkyl amine, an alkyl (poly)glycoside and the like. Preferable nonionic surfactants are one or more selected from an alkyl (poly)glycoside and a polyoxyalkylenealkyl ether.

Exemplary amphoteric surfactants are an alkylbetaine, an alkyl (with 8 or more and 18 or less carbons) dimethyl amine oxide and the like.

Component (E) is more preferably one or more selected from an alkylbetaine, an alkyl (with 8 or more and 18 or less carbons) dimethyl amine oxide and an alkyl (poly)glycoside from the viewpoint of formulation stability.

When the herbicide composition of the present invention contains component (E), the content of component (E) is preferably 0.5 mass% or more, more preferably 1 mass% or more and further preferably 2 mass% or more from the viewpoints of enhancing herbicidal effect and enhancing the degree of freedom of formulation, and preferably 20 mass% or less, more preferably 15 mass% or less and further preferably 10 mass% or less from the viewpoints of enhanced herbicidal effect and formulation stability. In the herbicide composition of the present invention, a mass ratio of (component (B)+component (C))/component (E) is preferably 2 or more, more preferably 4 or more and further preferably 6 or more from the viewpoints of enhanced herbicidal effect and economic efficiency at the time of transportation or storage, and preferably 50 or less, more preferably 20 or less and further preferably 10 or less from the viewpoints of enhancing herbicidal effect and enhancing the degree of freedom of formulation. Note that, when component (D) is an anionic surfactant, the content of component (D) in the composition may be based on a value expressed in terms of an acid-type compound.

Suitable solvents are water-miscible solvents from the viewpoints of formulation stability and improving handleability by reducing viscosity, and examples thereof include, for example, a monohydric alcohol with 1 or more and 4 or less carbons, a polyhydric alcohol with 2 or more and 4 or less carbons and a glycol ether with 3 or more and 10 or less total carbons, and a glycol ether is preferable. Exemplary monohydric alcohols are 2-propanol, 1-butanol and the like. Exemplary polyhydric alcohols are 1,3-propanediol and the like. Exemplary glycol ethers are propylene glycol monomethyl ether, dipropylene glycol and the like, and propylene glycol monomethyl ether is more preferable. Other exemplary solvents are tetrahydrofurfuryl alcohol and the like. Two or more solvents may be combined. When the herbicide composition of the present invention contains a solvent, the composition contains the solvent in an amount of preferably 2 mass% or more, more preferably 5 mass% or more and further preferably 8 mass% or more from the viewpoint of improving formulation stability, and preferably 20 mass% or less, more preferably 15 mass% or less and further preferably 12 mass% or less from the viewpoints of enhanced herbicidal effect and economic efficiency at the time of transportation or storage. A mass ratio of the solvent to component (B), i.e., a mass ratio of solvent/component (B), is preferably 0.05 or more and more preferably 0.25 or more from the viewpoint of improving formulation stability, and preferably 2 or less and more preferably 1 or less from the viewpoint of economic efficiency at the time of transportation or storage.

The herbicide composition of the present invention may be a herbicide composition formulated with components (A), (B) and (C), wherein a mass ratio between a formulation amount of component (B) and a formulation amount of component (C), (C)/(B), is 0.010 or more and 0.50 or less. The aforementioned content of each component can be replaced with and applied as its formulation amount.

The viscosity of the herbicide composition of the present invention at 25°C is preferably 1.0 mPa·s or more, more preferably 10 mPa·s or more and further preferably 25 mPa·s or more from the viewpoint of stability, and preferably 200 mPa·s or less and more preferably 100 mPa·s or less, and further preferably 70 mPa·s or less from the viewpoint of handleability. This viscosity is measured with a digital B-type viscometer manufactured by AMETEK Brookfield (model number: DV2T). CPA-41Z is used as a rotor, the liquid volume is 2 mL, the number of revolutions is 10 rpm and a numerical value 1 minute after the start of the measurement is taken as the viscosity.

The herbicide composition of the present invention is preferably excellent in transparency. For example, the absorbance at a wavelength of 660 nm is preferably 1.0 or less, more preferably 0.5 or less, further preferably 0.1 or less and furthermore preferably 0.05 or less. This absorbance is measured with a double beam type spectrophotometer (U-2910 manufactured by Hitachi, Ltd.). A standard disposable cell with 4 transparent surfaces manufactured by Nikko Hansen & CO., LTD. (product code 01960/00) is used as a cell and ultrapure water is used as a reference to perform the measurement.

The present invention provides use, as a herbicide, of a composition containing components (A), (B) and (C), wherein a mass ratio between the content of component (B) and the content of component (C), (C)/(B), is 0.010 or more and 0.50 or less. The aspects mentioned in the herbicide composition of the present invention can be appropriately applied to the use as a herbicide of the present invention. In the use as a herbicide of the present invention, components (A), (B), (C) and optional components and their preferable modes are the same as those mentioned in the herbicide composition of the present invention.

The present invention provides a method for producing a herbicide composition including mixing components (A), (B) and (C), wherein a mass ratio between a mixed amount of component (B) and a mixed amount of component (C), (C)/(B), is 0.010 or more and 0.50 or less. The aspects mentioned in the herbicide composition of the present invention and a glufosinate efficacy enhancing agent composition of the present invention mentioned below can be appropriately applied to the method for producing a herbicide composition of the present invention. In the method for producing a herbicide composition of the present invention, components (A), (B), (C) and optional components and their preferable modes are the same as those mentioned in the herbicide composition of the present invention and the glufosinate efficacy enhancing agent composition of the present invention. The method for producing a herbicide composition of the present invention preferably includes mixing with water.

### [Weeding method]

The present invention can provide a weeding method including spraying a herbicide spray liquid prepared from the herbicide composition of the present invention to a plant. The herbicide spray liquid is preferably prepared by adding water to the herbicide composition of the present invention.

The aspects mentioned in the herbicide composition of the present invention can be appropriately applied to the weeding method of the present invention.

In the weeding method of the present invention, the herbicide composition of the present invention is used by diluting with water in such a manner that the total content of components (A), (B) and (C) in the herbicide spray liquid is preferably 200 ppm or more, more preferably 400 ppm or more and further preferably 500 ppm or more from the viewpoint of improving herbicidal effect, and preferably 50000 ppm or less, more preferably 10000 ppm or less and further preferably 5000 ppm or less from the viewpoint of reducing environmental burden.

In the weeding method of the present invention, the herbicide spray liquid is sprayed at a proportion of preferably 0.5 L/ha or more, more preferably 50 L/ha or more, further preferably 200 L/ha or more and furthermore preferably 500 L/ha or more from the viewpoint of obtaining agrochemical efficacy, and sprayed at a proportion of preferably 2000 L/ha or less, more preferably 1500 L/ha or less, further preferably 1200 L/ha or less and furthermore preferably 1000 L/ha or less from the viewpoint of reducing environmental burden.

The weeding method of the present invention includes applying a predetermined spray liquid to weeds, which are the plants to be eradicated. In the agricultural field, weeds are recognized as herbaceous plants that grow in and around farmland and are harmful to crop production. Further, in non-agricultural fields, they are recognized, for example, as herbaceous plants that naturally grow not only in farmland but also in non-farmland such as roads, railroad tracksides, embankments, factory sites, developed land, lawns, gardens and the like, and hinder the function of the land or cause disaster prevention or landscape problems. The weeds used herein include either of these herbaceous plants. Exemplary weeds are broadleaf weeds, gramineous weeds and the like. Broadleaf weeds have reticulate leaf veins unlike weeds having linear leaves or having parallel leaf veins such as gramineous weeds.

Exemplary weeds to which the weeding method of the present invention is directed are gramineous weeds. Exemplary gramineous weeds are *Echinochloa crus-galli, Setaria viridis, Setaria pumila, Setaria viridis f. misera, Poa annua, Alopecurus aequalis, Eragrostis multicaulis* steud., *Digitaria violascens* Link, *Digitaria ciliaris, Eragrostis ferruginea, Dactylis glomerata* (orchard grass), *Miscanthus sinensis, Paspalum thunbergii* Kunth ex Steud., *Imperata cylindrica* (L.) P.Beauv., *Pennisetum alopecuroides, Phragmites australis* and bamboo grasses, and *Echinochloa crus-galli* is preferable from the viewpoint of agrochemical efficacy.

The weeding method of the present invention can be directed to weeds selected from broadleaf weeds and gramineous weeds. Further, the weeding method of the present invention can be directed to *Echinochloa crus-galli.*

### [Glufosinate efficacy enhancing agent composition]

The present invention can provide a glufosinate efficacy enhancing agent composition containing components (B) and (C), wherein a mass ratio between the content of component (B) and the content of component (C), (C)/(B), is 0.010 or more and 0.50 or less.

Component (A) is excluded from the components with which the glufosinate efficacy enhancing agent composition of the present invention is formulated.

The herbicide composition of the present invention can be prepared by formulating the glufosinate efficacy enhancing agent composition of the present invention with component (A). That is, the method for producing a herbicide composition of the present invention can be a producing method including mixing the above glufosinate efficacy enhancing agent composition and component (A).

The aspects mentioned in the herbicide composition and weeding method of the present invention can be appropriately applied to the glufosinate efficacy enhancing agent composition of the present invention. In the glufosinate efficacy enhancing agent composition of the present invention, components (A), (B) and (C) and their preferable modes are the same as those mentioned in the herbicide composition of the present invention.

The glufosinate efficacy enhancing agent composition of the present invention contains component (B) in an amount of preferably 10 mass% or more, more preferably 20 mass% or more and further preferably 30 mass% or more from the viewpoints of ease of handling, enhanced herbicidal effect and economic efficiency at the time of transportation or storage, and preferably 90 mass% or less, more preferably 80 mass% or less and further preferably 70 mass% or less from the viewpoint of improving formulation stability.

The glufosinate efficacy enhancing agent composition of the present invention contains component (C) in an amount of preferably 0.1 mass% or more, more preferably 0.25 mass% or more and further preferably 0.5 mass% or more from the viewpoints of ease of handling, enhanced herbicidal effect and economic efficiency at the time of transportation or storage, and preferably 20 mass% or less, more preferably 10 mass% or less and further preferably 5 mass% or less from the viewpoints of enhancing herbicidal effect and improving formulation stability.

In the glufosinate efficacy enhancing agent composition of the present invention, a mass ratio between the content of component (B) and the content of component (C), (C)/(B), is 0.010 or more, preferably 0.015 or more, more preferably 0.025 or more, further preferably 0.050 or more and furthermore preferably 0.10 or more from the viewpoints of ease of handling and enhanced herbicidal effect, and 0.50 or less, preferably 0.45 or less, more preferably 0.34 or less, further preferably 0.25 or less, furthermore preferably 0.20 or less and furthermore preferably 0.12 or less from the same viewpoints.

In the glufosinate efficacy enhancing agent composition of the present invention, the total content of components (B) and (C) is preferably 10 mass% or more, more preferably 15 mass% or more, further preferably 20 mass% or more and furthermore preferably 30 mass% or more from the viewpoint of economic efficiency at the time of transportation or storage, and preferably 90 mass% or less, more preferably 80 mass% or less and further preferably 70 mass% or less from the viewpoint of improving formulation stability.

The glufosinate efficacy enhancing agent composition of the present invention may be a glufosinate efficacy enhancing agent composition formulated with components (B) and (C), wherein a mass ratio between a formulation amount of component (B) and a formulation amount of component (C), (C)/(B), is 0.010 or more and 0.50 or less. The aforementioned content of each component can be replaced with and applied as its formulation amount.

The present invention provides a method for producing a glufosinate efficacy enhancing agent composition including mixing components (B) and (C), wherein a mass ratio between a mixed amount of component (B) and a mixed amount of component (C), (C)/(B), is 0.010 or more and 0.50 or less. The aspects mentioned in the herbicide composition of the present invention and the glufosinate efficacy enhancing agent composition of the present invention can be appropriately applied to the method for producing a glufosinate efficacy enhancing agent composition of the present invention. In the method for producing a glufosinate efficacy enhancing agent composition of the present invention, components (B), (C) and optional components and their preferable modes are the same as those mentioned in the herbicide composition of the present invention and the glufosinate efficacy enhancing agent composition of the present invention. The method for producing a glufosinate efficacy enhancing agent composition of the present invention preferably includes mixing with water.

The glufosinate efficacy enhancing agent composition of the present invention may be a liquid composition from the viewpoint of ease of handling. In addition, it is preferably a liquid composition containing water.

The glufosinate efficacy enhancing agent composition of the present invention contains water in an amount of 5 mass% or more, more preferably 8 mass% or more and further preferably 10 mass% or more from the viewpoint of formulation stability, and 60 mass% or less, more preferably 50 mass% or less and further preferably 40 mass% or less from the viewpoint of economic efficiency at the time of transportation or storage.

As the water, tap water, distilled water, deionized water or the like can be used in such a range that does not inhibit the effect of the herbicide composition of the present invention, and deionized water is preferable from the viewpoint of stability.

The glufosinate efficacy enhancing agent composition of the present invention can optionally contain compounds other than components (A) to (C) and water, for example, a defoamer, a surfactant, a solvent, a chelating agent, a pH adjuster, inorganic salts, a solubilizing agent, a colorant, an evaporation inhibitor, a thickener and the like.

When the glufosinate efficacy enhancing agent composition of the present invention is formulated with component (A), it is favorably used by formulating in such a manner that a mass ratio between a formulation amount of component (A) and a total formulation amount of components (B) and (C), [(B)+(C)]/(A), is preferably 0.1 or more, more preferably 0.3 or more and further preferably 0.5 or more from the viewpoint of enhancing herbicidal effect, and preferably 3 or less, more preferably 2 or less and further preferably 1.5 or less from the viewpoints of reducing environmental burden and improving formulation stability. That is, the method for producing a herbicide composition of the present invention preferably includes mixing component (A) and the glufosinate efficacy enhancing agent composition in such a manner that a mass ratio between the amount of component (A) and the total amount of components (B) and (C), [(B)+(C)]/(A), falls within the above range to produce the composition.

The glufosinate efficacy enhancing agent composition of the present invention preferably contains the aforementioned component (D). Specific examples and preferable modes of component (D) are the same as those in the herbicide composition of the present invention.

When the glufosinate efficacy enhancing agent composition of the present invention contains component (D), the composition contains component (D) in an amount of preferably 0.1 mass% or more, more preferably 0.25 mass% or more and further preferably 0.5 mass% or more from the viewpoints of enhanced herbicidal effect and economic efficiency at the time of transportation or storage, and preferably 20 mass% or less, more preferably 10 mass% or less and further preferably 5 mass% or less from the viewpoints of enhancing herbicidal effect and improving formulation stability. In addition, when the glufosinate efficacy enhancing agent composition of the present invention contains component (D), a mass ratio between the content of component (B) and the content of component (D), (D)/(B), is preferably 0.01 or more, more preferably 0.03 or more and further preferably 0.05 or more, and preferably 0.4 or less, more preferably 0.2 or less, further preferably 0.1 or less and furthermore preferably 0.08 or less.

The present invention provides use, as a glufosinate efficacy enhancing agent, of a composition containing components (B) and (C), wherein a mass ratio between the content of component (B) and the content of component (C), (C)/(B), is 0.010 or more and 0.50 or less. In addition, the present invention provides application, for use in enhancing the efficacy of glufosinate, of a composition containing components (B) and (C), wherein a mass ratio between the content of component (B) and the content of component (C), (C)/(B), is 0.010 or more and 0.50 or less. The composition preferably contains component (D). The aspects mentioned in the herbicide composition, weeding method and glufosinate efficacy enhancing agent composition of the present invention can be appropriately applied to the use as a glufosinate efficacy enhancing agent and the application of the present invention. In the use as a glufosinate efficacy enhancing agent and the application of the present invention, components (A), (B) and (C) and their preferable modes are the same as those mentioned in the herbicide composition of the present invention.

The viscosity of the glufosinate efficacy enhancing agent composition of the present invention at 25°C is preferably 10000 mPa·s or more, more preferably 20000 mPa·s or more and further preferably 25000 mPa·s or more from the viewpoint of the stability of the composition, and preferably 100000 mPa·s or less, more preferably 80000 mPa·s or less and further preferably 50000 mPa·s or less from the viewpoint of handleability. This viscosity is measured with a digital B-type viscometer manufactured by AMETEK Brookfield (model number: DV2T). CPA-41Z is used as a rotor, the liquid volume is 2 mL, the number of revolutions is 10 rpm and a numerical value 1 minute after the start of the measurement is taken as the viscosity.

The absorbance of the glufosinate efficacy enhancing agent composition of the present invention at a wavelength of 660 nm is preferably 0.1 or more, more preferably 0.5 or more and further preferably 1.0 or more and preferably 5.0 or less, more preferably 4.0 or less and further preferably 3.0 or less. This absorbance is measured with a double beam type spectrophotometer (U-2910 manufactured by Hitachi, Ltd.). A standard disposable cell with 4 transparent surfaces manufactured by Nikko Hansen & CO., LTD. (product code 01960/00) is used as a cell and ultrapure water is used as a reference to perform the measurement.

### Examples

Formulation components used in examples and comparative examples are shown below.

### <Formulation components>

Component (A)
   · A1: glufosinate ammonium salt (manufactured by FUJIFILM Wako Pure Chemical Corporation)
Component (B)
   · B1: sodium polyoxyethylene (average number of added moles 2) lauryl ether sulfate ("EMAL 270J" manufactured by Kao Corporation, aqueous solution with 70 mass% of active component)
   · B2: sodium polyoxyethylene (average number of added moles 3) lauryl ether sulfate ("EMAL 20C" manufactured by Kao Corporation, aqueous solution with 25 mass% of active component)
Component (C)
   · C1: decyl alcohol ("KALCOL 1098" manufactured by Kao Corporation)
   · C2: dodecyl alcohol ("KALCOL 2098" manufactured by Kao Corporation)
   · C3: N,N-dimethyldecylamine (manufactured by Tokyo Chemical Industry Co., Ltd.)
   · C4: isotridecanol ("TRIDECANOL" manufactured by KH Neochem Co., Ltd.)
Component (D)
   · D1: sodium dodecyl benzene sulfonate ("NEOPELEX G-25" manufactured by Kao Corporation, aqueous solution with 25 mass% of active component)
Component (E)
   · E1: decyl glucoside ("MYDOL 10" manufactured by Kao Corporation)
Solvent
   · PM: propylene glycol monomethyl ether ("Methyl Propylene Glycol" manufactured by NIPPON NYUKAZAI CO., LTD.)
Defoamer
   · KF-6701: modified-silicone oil, KF-6701, manufactured by Shin-Etsu Chemical Co., Ltd.

### <Example 1 and comparative example 1>

Herbicide compositions shown in Tables 1 and 2 were prepared using the above formulation components, and evaluated for the following items. The results are shown in Tables 1 and 2. The herbicide compositions in Tables 1 and 2 were prepared in the usual manner. That is, components (A), (B), (C), (D) and (E), the solvent and the defoamer in formulation amounts shown in the tables were added to an appropriate amount of ion exchange water and dissolved therein at room temperature (25°C). Note that all mass percentages for the formulation components in Tables 1 and 2 are numerical values based on the active components (for some components, values expressed in terms of the acid-type compounds or amine-type compounds). Further, in Tables 1 and 2, "Balance" for water is the amount that makes the total composition 100 mass%.

### [Method for testing formulation stability 1]

10 g of each herbicide composition in Table 1 immediately after prepared was placed in a transparent glass container (20 mL in capacity) and stored for a day in a thermostatic chamber at 80°C, and then, the appearance was visually observed, and the formulation stability was judged according to the following criteria. The results are shown in Table 1. Note that, when the glufosinate ammonium salt was replaced with a glyphosate ammonium salt (manufactured by FUJIFILM Wako Pure Chemical Corporation), the composition did not become uniform under any of the conditions shown in Table 1**.**
Uniform: not separated into two layers and uniform
Separated: separated into two layers

### [Method for testing herbicidal activity 1]

*Echinochloa crus-galli* was grown in 9 cm pots and plant bodies with a grass height of about 40 cm were used for the test. 3.3 g of each herbicide composition shown in Tables 1 and 2 was added to 1 L of water and uniformly stirred, thereby preparing each herbicide spray liquid. Each herbicide spray liquid prepared was foliarly sprayed on 5 pots of *Echinochloa crus-galli* at a spray volume equivalent to 25 L/10 a to cover all the plant bodies. Herbicidal activity 14 days after the foliar spraying was evaluated.

The evaluation of the herbicidal activity was visually judged, and evaluations were made with a score of 0 for the condition of an untreated pot on which no herbicide had been sprayed and 100 for the condition in which the above-ground parts of *Echnochloa crus-galli* had been completely withered up. Herbicidal effect in each pot was judged to make evaluations, and the average value of the evaluation scores is shown in Tables 1 and 2. The higher the numerical value is, the higher the herbicidal efficacy is.

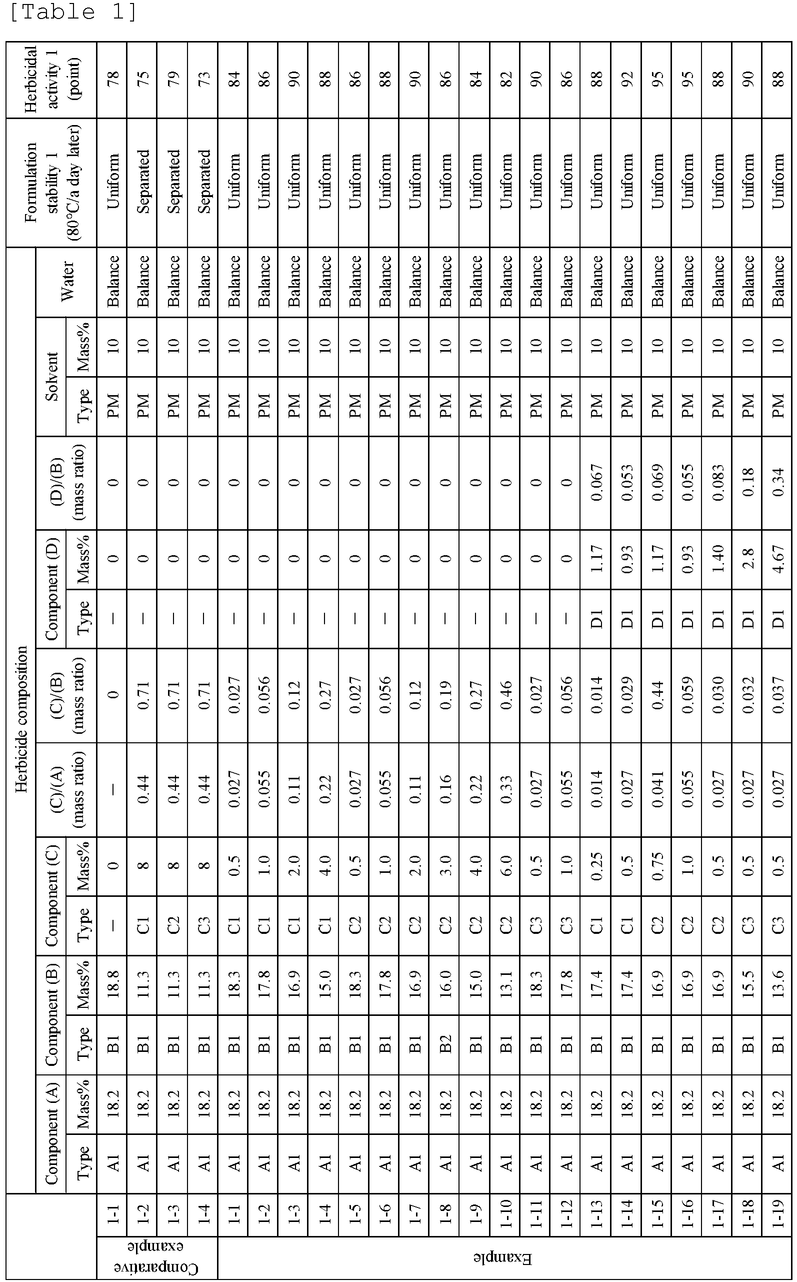

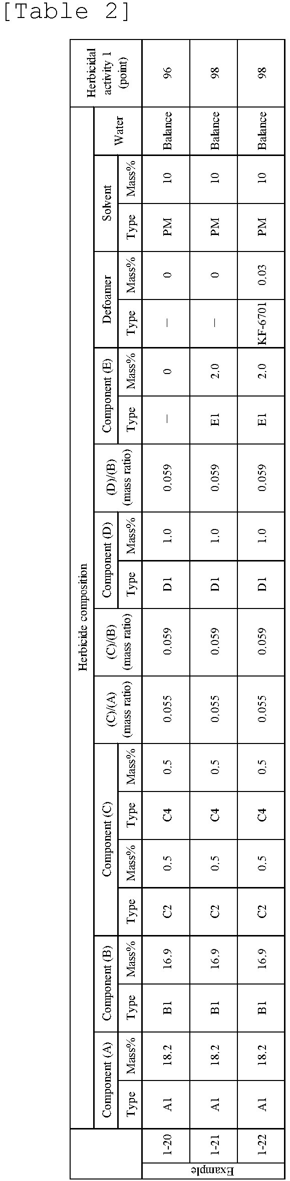

In example 1-22, which contains the defoamer, the foaming of the composition was suppressed, and the productivity or the ease of refilling of the composition and the ease of preparation or the handleability of the herbicide spray liquid were improved, while the herbicidal performance was maintained.

### <Example 2 and comparative example 2>

Glufosinate efficacy enhancing agent compositions shown in Table 3 were prepared using the above formulation components, and evaluated for the following items. The results are shown in Table 3. The glufosinate efficacy enhancing agent compositions in Tables 3 were prepared in the usual manner. That is, components (B) and (C) in formulation amounts in the table were added to an appropriate amount of ion exchange water and dissolved therein at room temperature (25°C). Note that all mass percentages for the formulation components in Table 3 are numerical values based on the active components (for some components, values expressed in terms of the acid-type compounds or amine-type compounds). Further, in Table 3, "Balance" for water is the amount that makes the total composition 100 mass%.

### [Method for measuring viscosity of efficacy enhancing agent composition]

The viscosity of the efficacy enhancing agent compositions in Table 3 was measured with a digital rotational viscometer manufactured by AMETEK Brookfield (model number: DV2T). CPA-41Z was used as a cone spindle, the liquid volume was 2 mL, the number of revolutions was 10 rpm, and a numerical value 1 minute after the start of the measurement was taken as the viscosity. The results are shown in Table 3**.**

### [Method for testing formulation stability 2]

10 g of each herbicide composition, which was prepared in the usual manner from 50 parts by mass of each efficacy enhancing agent composition in Table 3, 20 parts by mass of the glufosinate ammonium salt and 30 parts by mass of water, was placed in a transparent glass container (20 mL in capacity) and stored for a day in a thermostatic chamber at 80°C, and then, the appearance was visually observed, and the formulation stability was judged according to the following criteria. The results are shown in Table 3**.** Note that, when the glufosinate ammonium salt was replaced with a glyphosate ammonium salt, the composition did not become uniform under any of the conditions shown in Table 3**.**
Uniform: not separated into two layers and uniform
Separated: separated into two layers

### [Method for testing herbicidal activity 2]

Herbicidal activity was evaluated in the same manner as in the method for testing herbicidal activity 1 using herbicide compositions prepared at the same composition ratio as in the above method for testing formulation stability 2. The results are shown in Table 3.

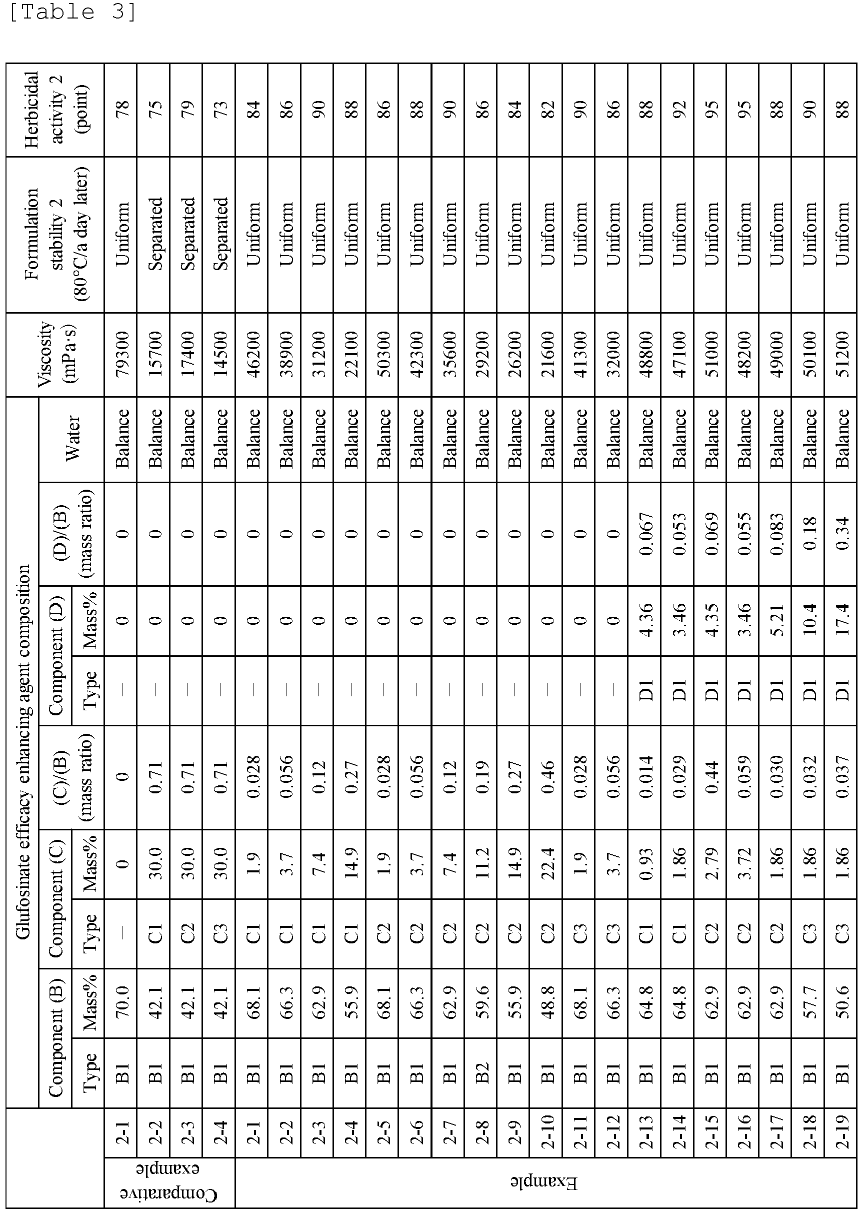

## Claims

1. A herbicide composition comprising the following components (A), (B) and (C), wherein a mass ratio between the content of the component (B) and the content of the component (C), (C)/(B), is 0.010 or more and 0.50 or less:
component (A): a compound selected from glufosinate and a salt thereof;
component (B): a compound represented by the following general formula (B-I):
R^{1b}O(R^{2b}O)ₙSO₃⁻M⁺ (B-I)
wherein R^{1b} is a hydrocarbon group with 8 or more and 24 or less carbons, R^{2b} is an alkanediyl group with 2 or more and 4 or less carbons, n is an average number of added moles and 0 or more and 30 or less, and M⁺ is a counter ion; and
component (C): one or more compounds selected from a compound represented by the following general formula (C-I) and a compound represented by the following general formula (C-II):
R^{1c}-OH (C-I)
wherein R^{1c} represents a hydrocarbon group with 8 or more and 18 or less carbons; and
R^{2c}-N(R^{3c})₂ (C-II)
wherein R^{2c} represents a hydrocarbon group with 6 or more and 18 or less carbons, and R^{3c} represents independently a hydrogen atom, a methyl group or a hydroxyethyl group.

2. The herbicide composition according to claim 1, further comprising the following component (D):
component (D): an aromatic sulfonate salt having an aliphatic hydrocarbon group.

3. The herbicide composition according to claim 2, wherein the component (D) is one or more compounds selected from an alkylbenzene sulfonate salt, an alkylnaphthalenesulfonate salt and an alkyl diphenyl ether disulfonate salt.

4. The herbicide composition according to claim 2 or 3, wherein a mass ratio between the content of the component (B) and the content of the component (D), (D)/(B), is 0.01 or more and 0.4 or less.

5. The herbicide composition according to any one of claims 1 to 4, wherein R^{1c} has 10 or more and 14 or less carbons.

6. The herbicide composition according to any one of claims 1 to 5, comprising the component (A) in an amount of 5 mass% or more and 40 mass% or less.

7. The herbicide composition according to any one of claims 1 to 6, wherein a mass ratio between the content of the component (A) and the total content of the components (B) and (C), [(B)+(C)]/(A), is 0.1 or more and 3 or less.

8. The herbicide composition according to any one of claims 1 to 7, wherein a mass ratio between the content of the component (A) and the content of the component (C), (C)/(A), is 0.01 or more and 0.4 or less.

9. The herbicide composition according to any one of claims 1 to 8, comprising a component selected from an alkylbetaine, an alkyl (with 8 or more and 18 or less carbons) dimethyl amine oxide and an alkyl (poly) glycoside.

10. A weeding method comprising spraying a herbicide spray liquid prepared from the herbicide composition according to any one of claims 1 to 9 to a plant.

11. A glufosinate efficacy enhancing agent composition comprising the following components (B) and (C) and water, wherein
the amount of water in the composition is 5 mass% or more and 60 mass% or less, and
a mass ratio between the content of the component (B) and the content of the component (C), (C)/(B), is 0.010 or more and 0.50 or less:
component (B): a compound represented by the following general formula (B-I):
R^{1b}O(R^{2b}O)ₙSO₃⁻M⁺ (B-I)
wherein R^{1b} is a hydrocarbon group with 8 or more and 24 or less carbons, R^{2b} is an alkanediyl group with 2 or more and 4 or less carbons, n is an average number of added moles and 0 or more and 30 or less, and M⁺ is a counter ion; and
component (C): one or more compounds selected from a compound represented by the following general formula (C-I) and a compound represented by the following general formula (C-II):
R^{1c}-OH (C-I)
wherein R^{1c} represents a hydrocarbon group with 8 or more and 18 or less carbons; and
R^{2c}-N(R^{3c})₂ (C-II)
wherein R^{2c} represents a hydrocarbon group with 6 or more and 18 or less carbons, and R^{3c} represents independently a hydrogen atom, a methyl group or a hydroxyethyl group.

12. The glufosinate efficacy enhancing agent composition according to claim 11, wherein R^{1c} has 10 or more and 14 or less carbons.

13. The glufosinate efficacy enhancing agent composition according to claim 11 or 12, further comprising the following component (D):
component (D): an aromatic sulfonate salt having an aliphatic hydrocarbon group.

14. The glufosinate efficacy enhancing agent composition according to claim 13, wherein the component (D) is one or more compounds selected from an alkylbenzene sulfonate salt, an alkylnaphthalenesulfonate salt and an alkyl diphenyl ether disulfonate salt.

## Patentansprüche

1. Herbizidzusammensetzung, umfassend die folgenden Komponenten (A), (B) und (C), wobei ein Massenverhältnis zwischen dem Gehalt der Komponente (B) und dem Gehalt der Komponente (C), (C)/(B), 0,010 oder mehr und 0,50 oder weniger beträgt:
Komponente (A): eine Verbindung, ausgewählt aus Glufosinat und einem Salz davon;
Komponente (B): eine Verbindung, dargestellt durch die folgende allgemeine Formel (B-I):
R^{1b}O(R^{2b}O)ₙSO₃⁻M⁺ (B-I)
worin R^{1b} eine Kohlenwasserstoffgruppe mit 8 oder mehr und 24 oder weniger Kohlenstoffatomen ist, R^{2b} eine Alkandiylgruppe mit 2 oder mehr und 4 oder weniger Kohlenstoffatomen ist, n eine durchschnittliche Anzahl addierter Mole ist und 0 oder mehr und 30 oder weniger ist, und M⁺ ein Gegenion ist; und
Komponente (C): eine oder mehrere Verbindungen, ausgewählt aus einer Verbindung, dargestellt durch die folgende allgemeine Formel (C-I), und einer Verbindung, dargestellt durch die folgende allgemeine Formel (C-II):
R^{1c}-OH (C-I)
worin R^{1c} eine Kohlenwasserstoffgruppe mit 8 oder mehr und 18 oder weniger Kohlenstoffatomen darstellt; und
R^{2c}-N(R^{3c})₂ (C-II)
worin R^{2c} eine Kohlenwasserstoffgruppe mit 6 oder mehr und 18 oder weniger Kohlenstoffatomen darstellt, und R^{3c} unabhängig voneinander ein Wasserstoffatom, eine Methylgruppe oder eine Hydroxyethylgruppe darstellt.

2. Herbizidzusammensetzung gemäß Anspruch 1, ferner umfassend die folgende Komponente (D):
Komponente (D): ein aromatisches Sulfonatsalz mit einer aliphatischen Kohlenwasserstoffgruppe.

3. Herbizidzusammensetzung gemäß Anspruch 2, wobei die Komponente (D) eine oder mehrere Verbindungen ist, die aus einem Alkylbenzolsulfonatsalz, einem Alkylnaphthalinsulfonatsalz und einem Alkyldiphenyletherdisulfonatsalz ausgewählt sind.

4. Herbizidzusammensetzung gemäß Anspruch 2 oder 3, wobei ein Massenverhältnis zwischen dem Gehalt der Komponente (B) und dem Gehalt der Komponente (D), (D)/(B), 0,01 oder mehr und 0,4 oder weniger beträgt.

5. Herbizidzusammensetzung gemäß einem der Ansprüche 1 bis 4, wobei R^{1c} 10 oder mehr und 14 oder weniger Kohlenstoffatome aufweist.

6. Herbizidzusammensetzung gemäß einem der Ansprüche 1 bis 5, umfassend die Komponente (A) in einer Menge von 5 Massen-% oder mehr und 40 Massen-% oder weniger.

7. Herbizidzusammensetzung gemäß einem der Ansprüche 1 bis 6, wobei ein Massenverhältnis zwischen dem Gehalt der Komponente (A) und dem Gesamtgehalt der Komponenten (B) und (C), [(B)+(C)]/(A), 0,1 oder mehr und 3 oder weniger beträgt.

8. Herbizidzusammensetzung gemäß einem der Ansprüche 1 bis 7, wobei ein Massenverhältnis zwischen dem Gehalt der Komponente (A) und dem Gehalt der Komponente (C), (C)/(A), 0,01 oder mehr und 0,4 oder weniger beträgt.

9. Herbizidzusammensetzung gemäß einem der Ansprüche 1 bis 8, umfassend eine Komponente, ausgewählt aus einem Alkylbetain, einem Alkyl (mit 8 oder mehr und 18 oder weniger Kohlenstoffatomen)dimethylaminoxid und einem Alkyl (poly)glycosid.

10. Unkrautbekämpfungsverfahren, umfassend das Besprühen einer Pflanze mit einer Herbizid-Sprühflüssigkeit, hergestellt aus der Herbizidzusammensetzung gemäß einem der Ansprüche 1 bis 9.

11. Glufosinat-Wirksamkeitsverstärkungsmittelzusammensetzung, umfassend die folgenden Komponenten (B) und (C) und Wasser, wobei
die Wassermenge in der Zusammensetzung 5 Massen-% oder mehr und 60 Massen-% oder weniger beträgt, und
ein Massenverhältnis zwischen dem Gehalt der Komponente (B) und dem Gehalt der Komponente (C), (C) / (B), 0,010 oder mehr und 0,50 oder weniger beträgt:
Komponente (B): eine Verbindung, dargestellt durch die folgende allgemeine Formel (B-I):
R^{1b}O(R^{2b}O)ₙSO₃⁻M⁺ (B-I)
worin R^{1b} eine Kohlenwasserstoffgruppe mit 8 oder mehr und 24 oder weniger Kohlenstoffatomen ist, R^{2b} eine Alkandiylgruppe mit 2 oder mehr und 4 oder weniger Kohlenstoffatomen ist, n eine durchschnittliche Anzahl addierter Mole ist und 0 oder mehr und 30 oder weniger ist, und M⁺ ein Gegenion ist; und
Komponente (C): eine oder mehrere Verbindungen, ausgewählt aus einer Verbindung, dargestellt durch die folgende allgemeine Formel (C-I), und einer Verbindung, dargestellt durch die folgende allgemeine Formel (C-II):
R^{1c}-OH (C-I)
worin R^{1c} eine Kohlenwasserstoffgruppe mit 8 oder mehr und 18 oder weniger Kohlenstoffatomen darstellt; und
R^{2c}-N(R^{3c})₂ (C-II)
worin R^{2c} eine Kohlenwasserstoffgruppe mit 6 oder mehr und 18 oder weniger Kohlenstoffatomen darstellt, und R^{3c} unabhängig voneinander ein Wasserstoffatom, eine Methylgruppe oder eine Hydroxyethylgruppe darstellt.

12. Glufosinat-Wirksamkeitsverstärkungsmittelzusammensetzung gemäß Anspruch 11, wobei R^{1c} 10 oder mehr und 14 oder weniger Kohlenstoffatome aufweist.

13. Glufosinat-Wirksamkeitsverstärkungsmittelzusammensetzung gemäß Anspruch 11 oder 12, ferner umfassend die folgende Komponente (D):
Komponente (D): ein aromatisches Sulfonatsalz mit einer aliphatischen Kohlenwasserstoffgruppe.

14. Glufosinat-Wirksamkeitsverstärkungsmittelzusammensetzung gemäß Anspruch 13, wobei die Komponente (D) eine oder mehrere Verbindungen ist, die aus einem Alkylbenzolsulfonatsalz, einem Alkylnaphthalinsulfonatsalz und einem Alkyldiphenyletherdisulfonatsalz ausgewählt sind.

## Revendications

1. Composition herbicide comprenant les composants (A), (B) et (C) suivants, dans laquelle un rapport massique entre la teneur en composant (B) et la teneur en composant (C), (C)/(B), est de 0,010 ou plus et de 0,50 ou moins :
composant (A) : composé sélectionné parmi le glufosinate et un sel de celui-ci ; composant (B) : composé représenté par la formule générale (B-I) suivante :
R^{1b}O (R^{2b}O)ₙSO₃⁻M⁺ (B-I)
dans laquelle R^{1b} est un groupe hydrocarboné comportant 8 ou plus et 24 ou moins atomes de carbone, R^{2b} est un groupe alcanediyle comportant 2 ou plus et 4 ou moins atomes de carbone, n est le nombre moyen de moles ajoutées et 0 ou plus et 30 ou moins, et M⁺ est un contre-ion ; et
composant (C) : un ou plusieurs composés sélectionnés parmi un composé représenté par la formule générale (C-I) suivante et un composé représenté par la formule générale (C-II) suivante :
R^{1c}-OH (C-I)
dans laquelle R^{1c} représente un groupe hydrocarboné comportant 8 ou plus et 18 ou moins atomes de carbone ; et
R^{2C}-N(R^{3C})₂ (C-II)
dans laquelle R^{2c} représente un groupe hydrocarboné comportant 6 à 18 atomes de carbone, et R^{3c} représente indépendamment un atome d'hydrogène, un groupe méthyle ou un groupe hydroxyéthyle.

2. Composition herbicide liquide selon la revendication 1, comprenant en outre le composant (D) suivant :
composant (D) : sel de sulfonate aromatique présentant un groupe hydrocarboné aliphatique.

3. Composition herbicide selon la revendication 2, dans laquelle le composant (D) est un ou plusieurs composés sélectionnés parmi un sel de sulfonate d'alkylbenzène, un sel de sulfonate d'alkylnaphtalène et un sel de disulfonate d'alkyldiphényléther.

4. Composition herbicide selon la revendication 2 ou 3, dans laquelle un rapport massique entre la teneur en composant (B) et la teneur en composant (D), (D)/(B), est de 0,01 ou plus et de 0,4 ou moins.

5. Composition herbicide selon l'une quelconque des revendications 1 à 4, dans laquelle R^{1c} présente 10 ou plus et 14 ou moins atomes de carbone.

6. Composition herbicide selon l'une quelconque des revendications 1 à 5, comprenant le composant (A) en une quantité de 5 % en masse ou plus et 40 % en masse ou moins.

7. Composition herbicide selon l'une quelconque des revendications 1 à 6, dans laquelle un rapport massique entre la teneur en composant (A) et la teneur totale des composants (B) et (C), [(B)+(C)]/(A), est de 0,1 ou plus et de 3 ou moins.

8. Composition selon l'une quelconque des revendications 1 à 7, dans laquelle le rapport massique entre la teneur en composant (A) et la teneur en composant (C), (C)/(A) est de 0,01 ou plus et de 0,4 ou moins.

9. Composition selon l'une quelconque des revendications 1 à 8, comprenant un composant choisi parmi une alkylbétaïne, un oxyde d'alkyle (avec 8 ou plus et 18 ou moins d'atomes de carbones) -diméthylamine et un alkyl(poly)glycoside.

10. Procédé de désherbage comprenant la pulvérisation sur une plante d'un liquide herbicide préparé à partir de la composition herbicide selon l'une quelconque des revendications 1 à 9.

11. Composition d'agent améliorant l'efficacité du glufosinate comprenant les composants (B) et (C) suivants et de l'eau, dans laquelle
la quantité d'eau dans la composition est de 5 % en masse ou plus et de 60 % ou moins, et
le rapport massique entre la teneur en composant (B) et la teneur en composant (C), (C)/(B), est de 0,010 ou plus et de 0,50 ou moins :
composant (B) : composé représenté par la formule générale (B-I) suivante :
R^{1b}O(R^{2b}O)ₙSO₃⁻M⁺ (B-I)
dans laquelle R^{1b} est un groupe hydrocarboné comportant 8 ou plus et 24 ou moins atomes de carbone, R^{2b} est un groupe alcanediyle comportant 2 ou plus et 4 ou moins atomes de carbone, n est le nombre moyen de moles ajoutées et 0 ou plus et 30 ou moins, et M⁺ est un contre-ion ; et
composant (C) : un ou plusieurs composés sélectionnés parmi un composé représenté par la formule générale (C-I) suivante et un composé représenté par la formule générale (C-II) suivante :
R^{1c}-OH (C-I)
dans laquelle R^{2c} représente un groupe hydrocarboné comportant 8 ou plus et 18 ou moins atomes de carbone ; et
R^{2C}-N(R^{3C})₂ (C-II)
dans laquelle R^{2c} représente un groupe hydrocarboné comportant 6 ou plus et 18 ou moins atomes de carbone, et R^{3c} représente indépendamment un atome d'hydrogène, un groupe méthyle ou un groupe hydroxyéthyle.

12. Composition d'agent améliorant l'efficacité du glufosinate selon la revendication 11, dans laquelle R^{1c} présente 10 ou plus et 14 ou moins atomes de carbone.

13. Composition d'agent améliorant l'efficacité du glufosinate selon la revendication 11 ou 12, comprenant en outre le composant (D) suivant :
composant (D) : sel de sulfonate aromatique présentant un groupe hydrocarboné aliphatique.

14. Composition d'agent améliorant l'efficacité du glufosinate selon la revendication 13, dans laquelle le composant (D) est un ou plusieurs composés sélectionnés parmi un sel de sulfonate d'alkylbenzène, un sel de sulfonate d'alkylnaphtalène et un sel de disulfonate d'alkyldiphényléther.
